# EUROPÄISCHE PATENTSCHRIFT

(11) **EP 1 529 982 B1**
(45) Veröffentlichungstag und Bekanntmachung des Hinweises auf die Patenterteilung: **27.06.2007**
(21) Anmeldenummer: 03292757.6
(22) Anmeldetag: 04.11.2003
(51) Int. Cl.: F16F 9/54, F16F 1/387, F16F 7/08, F16F 13/04

(54) **Gelenk zum elastischen Koppeln zweier Bauteile und Dämpfer**
Elastic mount between two units and shock absorber with such a mount
Articulation élastique pour la liaison entre deux pièces et amortisseur avec une telle articulation élastique

(43) Veröffentlichungstag der Anmeldung: 11.05.2005
(73) Patentinhaber: Michelin AVS S.A.S., 58302 Decize Cedex (FR)
(72) Erfinder: Ducloux, Antoine, 58260 La Machine (FR)
(74) Vertreter: Weber-Bruls, Dorothée

(56) Entgegenhaltungen:
- DE-A- 3 624 085
- DE-B- 1 074 331
- FR-A- 1 087 744
- FR-A- 2 271 454
- GB-A- 589 383
- GB-A- 2 041 487
- US-A- 2 432 050
- US-A- 3 198 506
- US-A- 3 232 597
- US-A1- 2003 015 830
- PATENT ABSTRACTS OF JAPAN vol. 012, no. 018 (M-660), 20. Januar 1988 (1988-01-20) -& JP 62 178410 A (NISSAN MOTOR CO LTD;OTHERS: 01), 5. August 1987 (1987-08-05)

## Beschreibung

Die Erfindung betrifft ein elastisches Gelenk zum elastischen Koppeln zweier Bauteile und einen Dämpfer.

Um einen Kolben-Zylinder-Dämpfer an ein Fahrzeugchassis anzubringen, ist bekannt, das Ende einer Stange des Kolbens des Dämpfers über ein elastisches Gelenk an ein Fahrzeugkarosseriebauteil zu befestigen. Derartige elastische Gelenke haben die allgemeine Funktion, unter Gewährleistung einer gewissen Steifheit auch gute Dämpfungseigenschaften bereitzustellen.

Für eine anzustrebende Funktionsweise soll einerseits das elastische Gelenk bei einer Belastung mit hoher Frequenz und geringer Amplitude (üblicherweise 250 Hz, 0,01 mm) geringe Steifigkeitswerte und eine schwache Dämpfung erbringen, um damit eine akustische Isolierung der elastisch zu verbindenden Bauteilen zu erreichen, also um die Übertragung von Geräuschen, die beispielsweise durch das Rollen des Reifens auf einer Straße bei hoher Geschwindigkeit hervorgerufen werden, zu begrenzen. Andererseits sind bei kleinen Frequenzen mit großen Amplituden (üblicherweise 10 Hz und 0,5 mm) ein hohes Dämpfungsmaß erforderlich, damit beim Überfahren beispielsweise von Straßenerhebungen sichere Fahreigenschaften für das Kraftfahrzeug sichergestellt sind. Üblicherweise werden für elastische Gelenke viskoelastische Materialien herangezogen, bei denen allerdings mit Zunahme der Frequenz eine Verfestigung des Materials einhergeht.

Ferner ist bekannt, einen Elastomerkörper zwischen zwei Armaturen eines Gelenks anzuordnen, wobei im Falle von großen Amplituden ein Reibschlupf zwischen der Armatur und dem Elastomerkörper realisiert wird. Aufgrund der dabei auftretenden Gleitreibung wird ein erheblicher Teil der in das elastische Gelenk eingeleiteten Energie vernichtet, nämlich in Wärme- und Reibarbeit umgewandelt, wodurch die oben genannten gewünschten Gelenkeigenschaften schon sehr zufriedenstellend realisierbar sind. Insbesondere werden sehr gute Dämpfungswerte bei einer Belastung hoher Amplitude erzielt.

Ein derartiges elastisches Gelenk ist allerdings insofern nachteilig, als das Gleiten des Elastomerkörpers entlang der Armatur starke störende Geräusche hervorrufen kann, die unmittelbar in die Fahrgastzelle übertragen werden. Diese Geräusche treten vor allem bei bestimmten Temperatur- und Luftfeuchtigkeitsverhältnissen verstärkt auf, weswegen es schwierig ist, diese Geräusche genau zu bestimmen und diese unter allen vorstellbaren Umständen unterbindende Gegenmaßnahmen zu treffen.

Ferner leidet das bekannte elastische Gelenk mit Gleitreibschlupfbereich daran, daß sich der Elastomerkörper mit zunehmender Zeit aufgrund des Gleitreibung abnutzt und dadurch seine Dämpfungseigenschaft wegen des Kontaktverlusts mit dem zugeordneten Bauteil gänzlich verliert. Als Gegenmaßnahme gegen zu schnelle Abnutzung ist bekannt, statt natürlichem Elastomer ein Polyurethan-Material zu verwenden, das allerdings wegen dessen hohen Materialkosten für ein Massenprodukt, wie ein elastisches Gelenk an einem Kraftfahrzeugdämpfer, äußerst unwirtschaftlich ist.

Aus DE 36 24 085, die ein Gelenk mit den Merkmalen des Oberbegriffs des Anspruchs 1 sowie einen Dämpfer gemäß dem Oberbegriff des Anspruchs 16 offenbart, ist ein stoß- und schwingungsdämpfendes Lageelement für die Aufhängung von Antrieben bekannt. Zwischen der Aufhängung und dem Kraftfahrzeug ist eine Anordnung bestehend aus einem Gummiring und einem Reibbelagring vorgesehen. Bei größeren Amplituden beginnt der Reibbelag gegenüber der Fahrzeugkarosserie zu rutschen.

Es ist Aufgabe der Erfindung, ein elastisches Gelenk und einen Dämpfer mit einem elastischen Gelenk zu schaffen, das unter Wahrung geringer Herstellungskosten Schwingungsbelastungen im gesamten Spektrum von großen und kleinen Amplituden und Frequenzen eine gute Dauerbeständigkeit aufweist, wobei das elastische Gelenk eine akustische Entkopplung auch bei niedrigen Frequenzen und hoher Amplitude gewährleistet.

Diese Aufgabe wird durch ein Gelenk mit den Merkmalen des Anspruchs 1 sowie durch einen Dämpfer mit den Merkmalen des Anspruchs 16 gelöst, daß mit dem Elastomerkörper eine Reibdämpfungseinrichtung verbunden ist, welche aus einem Material gebildet ist, das starrer als das des Elastomerkörpers ist. Auf diese Weise weist das erfindungsgemäße Gelenk ein weicheres Material, das eine akustische Kopplung vor allem im Hochfrequenzbereich bewirkt, und ein steiferes Material auf, das für die Gleit- und Haftreibung im Gelenk zuständig ist und verschleißbeständig ist sowie ein geräuscharmes Reibgleiten gewährleistet. Dabei können erfindungsgemäß der Elastomerkörper und die Reibdämpfungseinrichtung zumindest teilweise aus einem Materialstück gefertigt sein, wobei der die Reibdämpfungseinrichtung bildende Teil durch verfestigende Mittel auf das gewünschte Maß versteift ist. Hierfür kann zum Beispiel ein Glasfasermaterial oder andere, den Elastomer verfestigende Werkstoffe herangezogen werden. Zudem weist erfindungsgemäß die Reibdämpfungseinrichtung wenigstens eine Reibfläche auf, an welcher der Elastomerkörper mit einem der Bauteile unmittelbar oder mittelbar derart gekoppelt ist, daß bei einer Belastung großer Amplitude ein Gleitreibschlupf gebildet ist. Dabei kann die Reibfläche direkt mit einem Gegenflächenbereich des Bauteils oder einer mit dem Elastomerkörper zu verbindenden Gelenkarmatur erfindungsgemäß zusammenwirken.

Bei einer bevorzugten Ausführung ist die Reibdämpfungseinrichtung als strukturell eigenständiges, von dem Elastomerkörper separates Zwischenbauteil ausgebildet, das an einem dem zu verbindenden Bauteil zugeordneten Bereich des Elastomerkörpers fest angebracht ist. Das Zwischenbauteil kann zur Reduzierung von Raumbedarf schalenartig oder lagenartig ausgebildet sein, also mit einer Abmessung, die durch eine gegenüber der Länge und Tiefe geringe Stärke bestimmt ist. An der von dem Elastomerkörper abgwandten, freien Seitenfläche des Zwischenbauteils ist die Reibfläche der Reibdämpfungseinrichtung vorgesehen, die in den jeweiligen Betriebszuständen den Haftreibschluß oder den Gleitreibschlupf zuläßt.

Bei der separaten Ausbildung der Reibdämpfungseinrichtung als Zwischenbauteil hat es sich als besonders vorteilhaft herausgestellt, daß ein elastomerfreies Material verwendet werden kann. Überraschenderweise werden sehr gute, einstellbare Haftreibungs- und Gleitreibungseigenschaften durch starre Kunststoffmaterialien, wie Polyamide, erzielt. Als besonders geeignet stellte sich ein mit Glasfaser verstärktes Polyamid heraus.

Ein weiterer Vorteil der strukturell separierten Ausbildung der Reibdämpfungseinrichtung besteht darin, daß die Herstellungskosten für das elastische Gelenk gegenüber den bekannten elastischen Gelenken mit Haftreibschluß und Gleitreibschlupf reduziert werden können. Als mit den bekannten Gelenken mit Polyurethan-Materialien für den Elastomerkörper eine teure Lösung für ein einigermaßen dauerbeständiges Gelenk vorgeschlagen wird, kann mit dem erfindungsgemäßen Gelenk ein natürlicher Elastomer für den Elastomerkörper, beispielsweise Kautschuk, verwendet werden, über das eine Menge Erfahrungswerte hinsichtlich der Fertigung von elastischen Gelenken existiert.

Je nach Belastungsart und Belastungsrichtung kann die Reibdämpfungseinrichtung an vielen verschiedenen Stellen im Gelenk unter Ausbildung von mindestens einer, vorzugsweise zwei oder mehreren Reibflächen, bevorzugterweise vier Reibflächen, vorgesehen sein.

Bei einer Weiterbildung der Erfindung ist die Reibfläche der Reibdämpfungseinrichtung derart ausgelegt, daß bei einer Überschreitung einer Amplitudenschwelle ein Funktionsübergang

Bei einer Weiterbildung der Erfindung ist die Reibfläche der Reibdämpfungseinrichtung derart ausgelegt, daß bei einer Überschreitung einer Amplitudenschwelle ein Funktionsübergang von dem Haftreibschluß in den Gleitreibschlupf an der Reibfläche vorbestimmbar stattfindet. Diese vorbestimmbare Einstellung einer Amplitudenschwelle kann durch die besondere Wahl des Reibungskoeffizienten an der Reibfläche und/oder durch die an der Reibfläche durch den Elastomerkörper wirkende Normalkraft verwirklicht werden. Hierbei erweist sich erneut die separate Ausbildung von Elastomerkörper und Reibdämpfungseinrichtung als Vorteil, als ein großes Spektrum an Reibflächen je nach Wahl des Materials für die Reibdämpfungseinrichtung zur Verfügung steht.

Die Reibfläche ist besonders dann wirksam, d.h. kann besonders dann viel Belastungsenergie durch Reibungsverluste vernichten, wenn sie im wesentlichen parallel zur Hauptrichtung der Schwingungsbelastung ausgerichtet ist. Selbstverständlich kann die Reibfläche auch in einem Winkel zur Hauptrichtung der Schwingungsbelastung liegen, allerdings ist bevorzugt, daß dieser Winkel wenigstens kleiner als 45° ist, d.h. die überwiegenden Richtungskomponente der Fläche entspricht der Hauptrichtung der Schwingungsbelastung.

Wie oben bereits angedeutet ist, ist der Elastomerkörper für das Aufbringen einer Normalkraft in Richtung auf die Reibfläche der Reibdämpfungseinrichtung verantwortlich, um die entsprechende Haftreibungs- bzw. Gleitreibungskraft zu erzeugen. Diese Normalkraft wird vorzugsweise durch Vorkomprimierung des Elastomerkörpers hervorgerufen. Die Vorkomprimierung wird vorzugsweise erst bei Montage des Gelenks entweder direkt an die zu verwendenden Bauteile oder an Zwischenteile, wie Gelenkarmaturen, realisiert.

Bei der Ausführung der Erfindung ist der Elastomerkörper des Gelenks mit zwei Kopplungsarmen, die im wesentlichen entgegengesetzt zueinander und im wesentlichen parallel zur Hauptrichtung der Schwingungsbelastung ausgerichtet sind, und mit einem mit der Reibdämpfungseinrichtung zusammenwirkenden Druckarm versehen, wobei im montierten Zustand der Druckarm vorkompromiert ist. Der Druckarm ist zum einen zum Aufbringen der Normalkraft an der Reibfläche verantwortlich, zum anderen zum Aufnehmen von quer zur Hauptrichtung angreifenden Kräften an dem Gelenk. Die zwei Kopplungsarme sind dazu da, für eine Grunddämpfung zwischen den elastische zu verbindenden Bauteilen zu sorgen und den Übergang vom Haftreibschluß- zum Gleitreibschlupfzustand kontinuierlich zu gestalten.

Bei einer Weiterbildung der Erfindung ist der Elastomerkörper rotationsförmig und weist einen T-förmigen Querschnitt auf, wobei der Druckarm den Hauptschenkel bildet, während die Seitenschenkel durch die Kopplungsarme realisiert sind.

Bei einer erfindungsgemäßen Weiterbildung des Gelenks ist ein Anschlag vorgesehen, der insbesondere bei einem Gleitreibschlupf die Gleitreibbewegung der Dämpfungseinrichtung an der Reibfläche vorzugsweise in Hauptbelastungsrichtung begrenzt. Beispielsweise können die Bewegungsgrenzen durch den Anschlag entsprechend einer bestimmten Dimensionierung der Reibdämpfungseinrichtung festgelegt werden.

Bei einer besonders bevorzugten Weiterbildung der Erfindung weist das Gelenk eine Armatur auf, die eine Gegenreibfläche aufweist, welche der Reibfläche zuzuordnen ist. Die Gegenreibfläche und die Reibfläche liegen aneinander und gewährleisten bei einer Schwingungsbelastung kleiner Amplitude einen sicheren Haftreibschluß zur Übertragung der Schwingungskräfte von der Armatur in den Elastomerkörper oder umgekehrt und bei einer Schwingungsbelastung großer Amplitude einen Gleitreibschlupf. Beim Gleitreibschlupf besteht also eine Relativbewegung zwischen der Armatur und dem die Reibfläche der Reibdämpfungseinrichtung bildenden Abschnitt.

Auch die Gegenreibfläche kann einstellbare Parameter, wie Reibungskoeffizient, bieten, die zur Bestimmung der Amplitudenschwelle nutzbar sind, bei der ein Haftreibschluß in den Gleitreibschlupf übergeht.

Um die Gleitreibschlupfbewegung insbesondere in Hauptdämpfungsrichtung zu begrenzen, ist die Armatur mit einer Aufnahme für den Elastomerkörper versehen. Durch die besondere Dimensionierung der Aufnahme sowie der Reibdämpfungseinrichtung können großzügige bzw. enge Freiräume realisiert werden, die je nach Gelenkausführung eine große Bewegungsfreiheit bzw. eine reduzierte Bewegungsfreiheit für den Gleitreibschlupf bereitstellen.

Bei einer bevorzugten Ausführung der Erfindung ist der Elastomerkörper vollständig mechanisch an der Armatur angebracht, d.h. ohne ein Vulkanisationsverfahren oder Haftmittel zu verwenden.

Bei einer besonderen Weiterbildung der Erfindung sind mehrere Dämpfungseinrichtungen, mindestens zwei Reibdämpfungseinrichtungen, vorgesehen, die miteinander flexibel verbunden sind. Mit dieser flexiblen Verbindung ist die Montage der separat ausgebildeten Reibdämpfungseinrichtung in einer Armatur wesentlich vereinfacht, denn die Reibdämpfungseinrichtung, an sich ein separates Bauteil, kann einfach zur Montage bezüglich der Armaturen und/oder des Elastomerkörpers positioniert werden.

Eine fertigungstechnisch besonders einfache und kostengünstige Lösung für die Reibdämpfungseinrichtung wird realisiert, wenn sämtliche Reibdämpfungseinrichtungen sowie die diese verbindenden Brückenstücke aus einem Stück, insbesondere einem Kunststoffstück, vorzugsweise einem Polyamidstück, verbunden sind.

Bei der bevorzugten Ausführung der Erfindung ist die Reibdämpfungseinrichtung zusätzlich verstärkt. Im Falle daß die Reibdämpfungseinrichtung als Zwischenbauteil realisiert ist, und aus einem starren Kunststoff, beispielsweise Polyamid, hergestellt ist, kann zur Verfestigung des starren Kunststoffs eine Anreicherung durch Glasfasern vorgesehen werden. Als besonders geeignet stellte sich hierbei überraschenderweise heraus, daß ein 30%iger Glasfaseranteil sehr gute Gleitreibeigenschaften sowie Haftreibeigenschaften bei Gewähren einer langen Lebensdauer bietet.

Eine besonders vorteilhafte Ausführung der Erfindung betrifft ein Gelenk mit zwei Armaturen, von denen eine Armatur an einem der Bauteile und die andere Armatur an dem anderen Bauteil befestigt ist. Die beiden Armaturen verbindet der Elastomerkörper, wobei zumindest zwischen einer Armatur und dem Elastomerkörper eine Reibdämpfungseinrichtung vorgesehen ist.

Ist eine oder mehrere Reibdämpfungseinrichtungem nur an einem Bauteil, so ist vorzugsweise die zweite Armatur in dem Elastomerkörper oder an dem Elastomerkörper anvulkanisiert. Bei einer bevorzugten Ausführung umgibt eine rotationsförmige Armatur, die eine Aufnahme für den Elastomerkörper bildet, die zweite Armatur.

Des weiteren betrifft die Erfindung einen Dämpfer für Kraftfahrzeuge mit einem erfindungsgemäßen Gelenk, das am Ende einer Dämpferstange eines Fahrwerksdämpfers befestigt ist und zum Montieren an einer Kraftfahrzeugkarosserie ausgelegt ist. Eine besonders einfache Montage kann mit einem Gelenk realisiert werden, das eine Armatur zum Anbringen an die Dämpferstange und eine Armatur zum Anbringen an ein Kraftfahrzeugkarosserieteil aufweist.

Weitere Eigenschaften, Vorteile und Merkmale der Erfindung werden durch die nun folgende Beschreibung bevorzugter Ausführungen der Erfindung anhand der beiliegenden Zeichnungen deutlich, in denen zeigen:
- Fig. 1: eine schematische Ansicht eines Fahrwerksabschnitts eines Kraftfahrzeugs mit einem erfindungsgemäßen Dämpfer;
- Fig. 2: eine Querschnittsansicht eines erfindungsgemäßen Gelenks, gesehen in Hauptrichtung der Schwingungsbelastung;
- Fig.: 3 eine Querschnittsansicht des erfindungsgemäßen Gelenks entlang der Schnittlinie III-III gemäß Fig. 2; und
- Fig. 4: eine Querschnittsansicht einer weiteren Ausführung eines erfindungsgemäßen Gelenks, gesehen in der Hauptrichtung der Schwingungsbelastung.

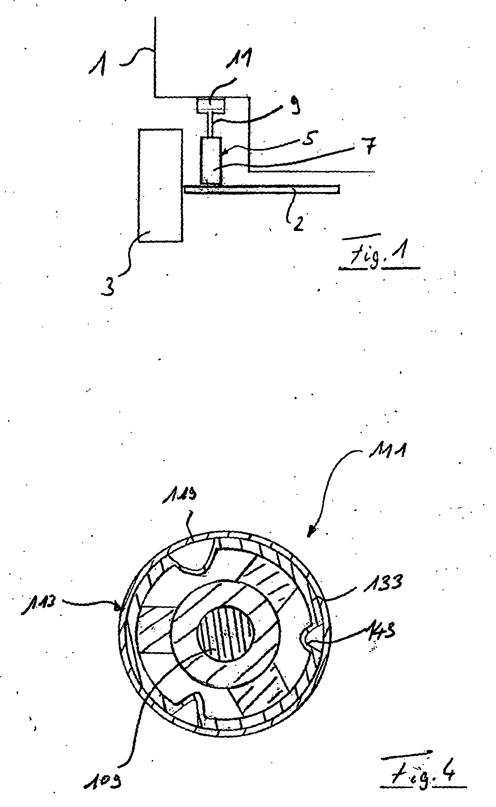

Figur 1 zeigt schematisch einen Karosserieabschnitt und eine Achse 2 mit einem daran montierten Rad 3, wobei der Karosserieabschnitt 1 und die Radachse 2 über einen Kolben-Zylinder-Dämpfer 5 verbunden sind. Der Dämpfer 5 weist einen Zylinder 7 und eine Dämpferstange 9 auf. Am Ende der Dämpferstange 9 ist ein erfindungsgemäßes Gelenk 11 angedeutet.

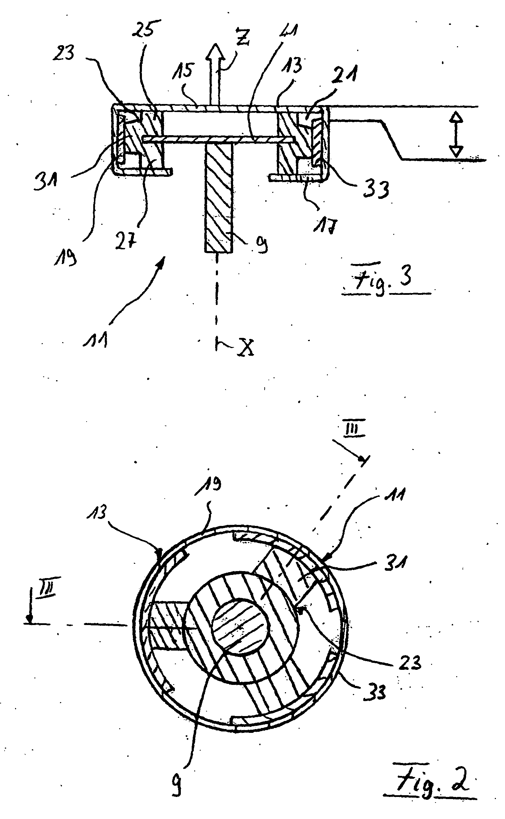

In den Figuren 2 und 3 ist eine Ausführung des erfindungsgemäßen Gelenks näher dargestellt. Das Gelenk 11 weist eine erste Außenarmatur 13 auf, die rotationsförmig zu einer Achse ausgebildet ist, die koaxial zur Längsrichtung X der Dämpferstange 9 liegt.

Die Hauptrichtung Z der Schwingungsbelastung liegt parallel und koaxial zur Längsrichtung X.

Die Außenarmatur 13 erstreckt sich in einem dem Karosserieteil (nicht dargestellt) zugewandten, geschlossenen Abschnitt 15 radial nach außen, und ein dem Abschnitt 15 gegenüberliegender, dem Kolben-Zylinder-Dämpfer zugewandter, offener Abschnitt 17 ist parallel zum geschlossenen Abschnitt 15 ausgebildet, wobei die Abschnitte 15 und 17 mit einem zu den Abschnitten senkrechten, axialen Verbindungsstück eine Armatureinheit bilden.

Die Armatur umfaßt eine Innenaufnahme 21, in der ein Elastomerkörper 23 ohne Verwendung von Vulkanisations- oder Haftmittel mechanisch eingesetzt ist.

Der Elastomerkörper 23 weist eine im Querschnitt T-förmige Gestalt auf, wobei zwei Kopplungsarme 25 bzw. 27 mit den zueinander Abschnitten 15 bzw. 17 unter Ausbildung einer Andrückkraft in Kontakt sind.

Ein sich zu den Kopplungsarmen 25, 27 senkrecht und radial nach außen erstreckender Druckarm 31 ist im Gegensatz zu den Kopplungsarmen 25, 27 nur kreissegmentmäßig ausgebildet (siehe Fig. 2). Der Druckarm 31 ist derart vorkomprimiert in der Aufnahme 21 der Armatur 13 eingesetzt, daß er eine Normalkraft in Richtung senkrecht zum Verbindungsstück 19 der Armatur 13 ausübt, wodurch ein Zwischenringsegment 33, das eine Reibdämpfungseinrichtung gemäß der Erfindung darstellt, an die Innenseitenfläche der Armatur 13 drückt.

Bei der Ausführung des erfindungsgemäßen Gelenks gemäß Figur 2 und 3 sind jeweils drei Zwischenringsegmente 33 vorgesehen, die nicht miteinander verbunden sind.

Die Zwischenringsegmente 33 erstrecken sich in Umfangsrichtung über die Ausdehnung der Druckarme 31 hinaus aufeinander zu. Auf diese Weise kann eine große Reibfläche zwischen den Zwischenringsegmenten 33 und dem Verbindungsstück 19 der Außenarmatur 13 bereitgestellt werden.

Eine zweite Armatur 41 des Gelenks 11 ist als rotationsförmige, scheibenartige Armatur 41 ausgebildet, die mittig an dem freien Ende der Dämpferstange 9 befestigt ist. Der Umfangsrand der Armatur 41 ist vollständig in dem Elastomerkörper 23 eingebettet.

Im Betrieb wirkt auf das erfindungsgemäße Gelenk hauptsächlich eine Schwingungsbelastung in Richtung Z. Diese wird über die Dämpferstange 9 und der Armatur 41 in den Elastomerkörper 23 eingeleitet. Bei einer Schwingungsbelastung kleiner Amplitude ist eine Haftreibungskraft zwischen der Reibfläche der Zwischenringsegmente 33 und der Innenfläche des Verbindungsstücks 19 der Außenarmatur 13 derart groß, daß ein Schlupf des Zwischenringsegments 33 relativ zur Armatur 13 verhindert wird.

Bei einer Schwingungsbelastung großer Amplitude wird die an der Reibfläche angreifende Belastungskraft derart groß, daß die Haftreibungskraft überwunden wird, und es zu einem Schlupf an den Reibflächen der Zwischenringsegmente und der Innenfläche des Abschnitts 19 der Armatur 13 kommt. Auf diese Weise ist gewährleistet, daß das erfindungsgemäße Gelenk eine hohe Dämpfungseigenschaft aufweist, wobei ein großer Teil der in das Gelenk eingebrachten Belastungsarbeit durch die Gleitreibungsschlupfarbeit vernichtet wird.

In Figur 4 ist eine weitere erfindungsgemäße Ausführung eines Gelenks dargestellt, wobei zu der Ausführung gemäß den Figuren 2 und 3 identische oder ähnliche Bauteile mit denselben Bezugsziffern versehen sind, die um 100 erhöht sind.

Die Ausführung gemäß Figur 4 unterscheidet sich von der gemäß den Figuren 2 und 3 darin, daß die Zwischenringelemente 133 über flexible Brückenstücke 143 verbunden sind. Auf diese Weise kann die Reibdämpfungseinrichtung bestehend hier aus drei Zwischenringelementen 133 aus einem Stück gefertigt werden, was zudem die Montierbarkeit der Reibdämpfungseinrichtung an der äußeren Armatur 113 vereinfacht.

### Bezugszeichenliste

- 1: Karosserieabschnitt
- 2: Achse
- 3: Rad
- 5: Kolben-Zylinder-Dämpfer
- 7: Zylinder
- 9: Dämpferstange
- 11: Gelenk
- 13: Außenarmatur
- 15: geschlossener Abschnitt
- 17: offener Abschnitt
- 19: Verbindungsstück
- 21: Innenaufnahme
- 23: Elastomerkörper
- 25,27: Kopplungsarme
- 31: Druckarm
- 33: Zwischenringsegmente
- 41: Armatur
- 133: Zwischenringsegmente
- 143: flexible Brückenstücke
- X: Längsrichtung
- Z: Hauptbelastungsrichtung

## Patentansprüche

1. Gelenk (11) zum elastischen Koppeln zweier Bauteile, insbesondere der Stange (9) eines Kraftfahrzeugdämpfers mit einem Kraftfahrzeugkarosserieteil, von welchen Bauteilen wenigstens eines einer schwingenden Belastung insbesondere im wesentlichen in einer Hauptrichtung Z ausgesetzt ist, umfassend einen die Bauteile miteinander verbindenden Elastomerkörper (23) und wenigstens eine mit dem Elastomerkörper (23) fest verbundene Reibdämpfungseinrichtung, die mit einem starreren Material als der Elastomerkörper (23) ausgeführt ist und mindestens eine Reibfläche aufweist, an welcher der Elastomerkörper (23) unmittelbar oder mittelbar mit einem der Bauteile derart koppelbar ist, daß bei einem Betriebszustand kleiner Schwingungsamplitude ein Haftreibschluß und bei einem Betriebszustand großer Schwingungsamplitude ein Gleitreibschlupf realisiert ist, **dadurch gekennzeichnet, daß** der Elastomerkörper (23) zwei Kopplungsarme (25, 27), die im wesentlichen entgegengesetzt zueinander und im wesentlichen parallel zur Hauptbelastungsrichtung (Z) ausgerichtet sind, und einen mit der Reibdämpfungseinrichtung zusammenwirkenden Druckarm (31) aufweist, wobei im montierten Zustand des Elastomerkörpers (23) zumindest der Druckarm (31) vorkomprimiert ist.

2. Gelenk (11) nach Anspruch 1, **dadurch gekennzeichnet, daß** die wenigstens eine Reibdämpfungseinrichtung durch ein strukturell eigenständiges Zwischenbauteil (33, 133) gebildet ist, das zwischen dem Elastomerkörper (23) und dem der Reibfläche zugeordneten Bauteil anzuordnen ist.

3. Gelenk (11) nach Anspruch 2, **dadurch gekennzeichnet, daß** das Zwischenbauteil aus (33, 133) einem starren Kunststoffmaterial, insbesondere aus Polyamid, das vorzugsweise mit Glasfaser angereichert ist, vorzugsweise ungefähr mit einem 30%igen Glasfaseranteil gebildet ist.

4. Gelenk (11) nach einem der Ansprüche 1 bis 3, **dadurch gekennzeichnet, daß** der Elastomerkörper (23) aus einem natürlichen Elastomer, vorzugsweise aus Kautschuk, gebildet ist.

5. Gelenk (11) nach einem der Ansprüche 1 bis 4, **dadurch gekennzeichnet, daß** die wenigstens eine Reibdämpfungseinrichtung mindestens zwei Reibflächen, vorzugsweise vier Reibflächen, aufweist.

6. Gelenk (11) nach einem der Ansprüche 1 bis 5, **dadurch gekennzeichnet, daß** die Reibfläche der Reibdämpfungseinrichtung derart ausgelegt ist, daß bei Überschreitung einer vorbestimmbaren Amplitudenschwelle ein Übergang von dem Haftreibschluß in den Gleitreibschlupf stattfindet.

7. Gelenk (11) nach einem der Ansprüche 1 bis 6, **dadurch gekennzeichnet, daß** auch die Kopplungsarme (25, 27) vorkomprimiert sind.

8. Gelenk (11) nach einem der Ansprüche 1 bis 7, **dadurch gekennzeichnet, daß** der Elastomerkörper (23) rotationsförmig und im Schnitt T-förmig ist.

9. Gelenk (11) nach einem der Ansprüche 1 bis 8, **dadurch gekennzeichnet, daß** wenigstens ein Anschlag vorgesehen ist, der bei einem Gleitreibschlupf eine Bewegung der Reibdämpfungseinrichtung insbesondere in Hauptbelastungsrichtung begrenzt.

10. Gelenk (11) nach einem der Ansprüche 1 bis 9, **dadurch gekennzeichnet, daß** eine, vor-zugsweise jeweils eine an einem der Bauteile zu befestigende Armatur (13) mit einer der Reibfläche zugeordneten Gegenreibfläche versehen ist, die zum Ausführen eines Gleitreibschlupfes der Reibdämpfungseinrichtung ausgelegt und/oder dimensioniert ist.

11. Gelenk (11) nach Anspruch 10, **dadurch gekennzeichnet, daß** die Armatur (13) eine Aufnahme für den Elastomerkörper (23) aufweist, wobei insbesondere die Aufnahme und die Reibdämpfungseinrichtung derart dimensioniert sind, daß Bewegungsgrenzen im Gleitreibschlupf festgelegt sind.

12. Gelenk (11) nach Anspruch 11, **dadurch gekennzeichnet, daß** der Elastomerkörper (23) vulkanisationsfrei und/oder haftmittelfrei in der Aufnahme eingesetzt ist.

13. Gelenk (11) nach einem der Ansprüche 1 bis 12, **dadurch gekennzeichnet, daß** mehrere Reibdämpfungseinrichtungen vorgesehen sind, von denen mindestens zwei Reibdämpfungseinrichtungen oder die miteinander flexibel verbunden sind.

14. Gelenk (11) nach Anspruch 13, **dadurch gekennzeichnet, daß** wenigstens zwei Reibdämpfungseinrichtungen und ein die beiden Reibdämpfungseinrichtungen flexibel verbindendes Brückenstück (143) aus einem Stück gefertigt sind.

15. Gelenk (11) nach einem der Ansprüche 11 bis 14, **dadurch gekennzeichnet, daß** eine weitere an ein Bauteil zu befestigende und mit dem Elastomerkörper (23) fest verbundene Armatur (41) vorgesehen ist, die insbesondere von der den Elastomerkörper (23) aufnehmenden Armatur (13) umgeben ist.

16. Dämpfer für Kraftfahrzeuge, **dadurch gekennzeichnet, daß** der Dämpfer ein Gelenk (11) nach einem der Ansprüche 1 bis 16 aufweist, das am Ende einer Dämpferstange (9) befestigt ist und zum Montieren an einem Kraftfahrzeugkarosserieteil ausgelegt ist.

## Claims

1. Joint (11) for the elastic coupling of two components, in particular the rod (9) of a motor vehicle damper to a motor vehicle body part, of which components at least one is exposed to an oscillating load, in particular essentially in a main direction Z, the joint comprising an elastomer body (23) which connects the components to each other, and at least one friction damping device which is connected fixedly to the elastomer body (23), is made with a more rigid material than the elastomer body (23) and has at least one friction surface at which the elastomer body (23) can be coupled directly or indirectly to one of the components in such a manner that a static friction connection is realized during an operating state of small oscillation amplitude and a sliding friction slip is realized during an operating state of large oscillation amplitude, **characterized in that** the elastomer body (23) has two coupling arms (25, 27) which are oriented essentially in opposite directions to each other and essentially parallel to the main loading direction (Z), and a pressure arm (31) which interacts with the friction damping device, with at least the pressure arm (31) being precompressed in the fitted state of the elastomer body (23).

2. Joint (11) according to Claim 1, **characterized in that** the at least one friction damping device is formed by a structurally independent intermediate component (33, 133) which is to be arranged between the elastomer body (23) and the component assigned to the friction surface.

3. Joint (11) according to Claim 2, **characterized in that** the intermediate component (33, 133) is formed from a rigid plastics material, in particular from polyamide, which is preferably enriched with glass fibre, preferably approximately with a 30% portion of glass fibre.

4. Joint (11) according to one of Claims 1 to 3, **characterized in that** the elastomer body (23) is formed from a natural elastomer, preferably from caoutchouc.

5. Joint (11) according to one of Claims 1 to 4, **characterized in that** the at least one friction damping device has at least two friction surfaces, preferably four friction surfaces.

6. Joint (11) according to one of Claims 1 to 5, **characterized in that** the friction surface of the friction damping device is designed in such a manner that, when a predefinable amplitude threshold is exceeded, a transition from the static friction connection into the sliding friction slip takes place.

7. Joint (11) according to one of Claims 1 to 6, **characterized in that** the coupling arms (25, 27) are also precompressed.

8. Joint (11) according to one of Claims 1 to 7, **characterized in that** the elastomer body (23) is shaped for rotation and is T-shaped in section.

9. Joint (11) according to one of Claims 1 to 8, **characterized in that** at least one stop is provided which, when there is sliding friction slip, limits a movement of the friction damping device, in particular in the main loading direction.

10. Joint (11) according to one of Claims 1 to 9, **characterized in that** a fitting (13), preferably in each case a fitting which is to be fastened to one of the components, is provided with a mating friction surface which is assigned to the friction surface and is designed and/or dimensioned in order to execute a sliding friction slip of the friction damping device.

11. Joint (11) according to Claim 10, **characterized in that** the fitting (13) has a receptacle for the elastomer body (23), with, in particular, the receptacle and the friction damping device being dimensioned in such a manner that movement limits in the sliding friction slip are defined.

12. Joint (11) according to Claim 11, **characterized in that** the elastomer body (23) is inserted in the receptacle without vulcanization and/or without adhesive agents.

13. Joint (11) according to one of Claims 1 to 12, **characterized in that** a plurality of friction damping devices are provided, of which at least two friction damping devices or the friction damping devices are connected flexibly to one another.

14. Joint (11) according to Claim 13, **characterized in that** at least two friction damping devices and a bridge piece (143) flexibly connecting the two friction damping devices are manufactured from one piece.

15. Joint (11) according to one of Claims 11 to 14, **characterized in that** a further fitting (41) is provided which is to be fastened to a component and is connected fixedly to the elastomer body (23) and, in particular, is surrounded by the fitting (13) receiving the elastomer body (23).

16. Damper for motor vehicles according to one of Claims 1 to 16, **characterized in that** the damper has a joint (11) which is fastened to the end of a damper rod (9) and is designed for fitting to a motor vehicle body part.

## Revendications

1. Articulation (11) pour l'accouplement élastique de deux composants, en particulier de la tige (9) d'un amortisseur de véhicule automobile avec une partie de carrosserie de véhicule automobile, dont au moins l'un est soumis à une sollicitation oscillante en particulier essentiellement dans une direction principale Z, comprenant un corps en élastomère (23) qui relie entre eux les composants et au moins un dispositif amortisseur à frottement relié fixement au corps en élastomère (23), lequel dispositif est réalisé avec un matériau plus rigide que celui du corps en élastomère (23) et présente au moins une surface de frottement, sur laquelle le corps en élastomère (23) peut être couplé directement ou indirectement avec l'un des composants de telle sorte qu'un serrage par frottement d'adhérence est réalisé dans un état de fonctionnement à faible amplitude d'oscillation, et qu'un glissement à frottement de glissement est réalisé dans un état de fonctionnement à forte amplitude d'oscillation, **caractérisée en ce que** le corps en élastomère (23) comporte deux bras d'accouplement (25, 27) qui sont orientés essentiellement en direction contraire l'un de l'autre et de façon essentiellement parallèle à la direction de sollicitation principale (Z), et un bras de pression (31) coopérant avec le dispositif amortisseur à frottement, au moins le bras de pression (31) étant pré-comprimé à l'état monté du corps élastomère (23).

2. Articulation (11) suivant la revendication 1, **caractérisée en ce que** le au moins un dispositif amortisseur à frottement est formé par un composant intermédiaire (33, 133) structurellement autonome, qui peut être disposé entre le corps en élastomère (23) et le composant associé à la surface de frottement.

3. Articulation (11) suivant la revendication 2, **caractérisée en ce que** le composant intermédiaire (33, 133) est réalisé en une matière plastique rigide, en particulier de polyamide, qui est enrichie de préférence par des fibres de verre, de préférence environ par 30% de fibres de verre.

4. Articulation (11) suivant l'une des revendications 1 à 3, **caractérisée en ce que** le corps en élastomère (23) est réalisé en un élastomère naturel, de préférence en caoutchouc.

5. Articulation (11) suivant l'une des revendications 1 à 4, **caractérisée en ce que** le au moins un dispositif amortisseur à frottement comporte au moins deux surfaces de frottement, de préférence quatre surfaces de frottement.

6. Articulation (11) suivant l'une des revendications 1 à 5, **caractérisée en ce que** la surface de frottement du dispositif amortisseur à frottement est dimensionnée de telle sorte qu'un passage du serrage par frottement d'adhérence au glissement à frottement de glissement a lieu lors d'un dépassement par le haut d'un seuil d'amplitude prédéterminable.

7. Articulation (11) suivant l'une des revendications 1 à 6, **caractérisée en ce que** les bras d'accouplement (25, 27) sont également précomprimés.

8. Articulation (11) suivant l'une des revendications 1 à 7, **caractérisée en ce que** le corps en élastomère (23) est de forme de rotation et en forme de T en coupe.

9. Articulation (11) suivant l'une des revendications 1 à 8, **caractérisée en ce qu'**au moins une butée est prévue, qui limite un déplacement du dispositif amortisseur à frottement, en particulier dans la direction de sollicitation principale, lors d'un glissement à frottement de glissement.

10. Articulation (11) suivant l'une des revendications 1 à 9, **caractérisée en ce qu'**une armature (13) à fixer respectivement sur l'un des composants est de préférence munie d'une surface antagoniste de frottement associée à la surface de frottement, laquelle surface antagoniste est conçue et/ou dimensionnée pour réaliser un glissement à frottement de glissement du dispositif amortisseur à frottement.

11. Articulation (11) suivant la revendication 10, **caractérisée en ce que** l'armature (13) présente un logement pour le corps en élastomère (23), le logement et le dispositif amortisseur à frottement étant en particulier dimensionnés de telle sorte que des limites de déplacement dans le glissement à frottement de glissement sont fixés.

12. Articulation (11) suivant la revendication 11, **caractérisée en ce que** le corps en élastomère (23) est mis en place dans le logement sans vulcanisation et/ou sans adhésif.

13. Articulation (11) suivant l'une des revendications 1 à 12, **caractérisée en ce que** plusieurs dispositifs amortisseurs à frottement sont prévus, dont au moins deux sont reliés ou reliés de façon flexible entre eux.

14. Articulation (11) suivant la revendication 13, **caractérisée en ce qu'**au moins deux dispositifs amortisseurs à frottement et une pièce de pontage (143) reliant de façon flexible les deux dispositifs amortisseurs à frottement sont fabriqués en une pièce.

15. Articulation (11) suivant l'une des revendications 11 à 14, **caractérisée en ce qu'**une autre armature (41) à fixer sur un composant et reliée fixement avec le corps en élastomère (23) est prévue, qui est en particulier entourée par l'armature (13) recevant le corps en élastomère (23).

16. Amortisseur (9) pour véhicule automobile, **caractérisé en ce que** l'amortisseur présente une articulation (11) suivant l'une des revendications 1 à 15, qui est fixée sur l'extrémité d'une tige d'amortisseur (9) et dimensionnée pour le montage sur une partie de carrosserie de véhicule automobile.
